Europäisches Patentamt

European Patent Office

Office européen des brevets

(19)

(11) Veröffentlichungsnummer: 0 024 045

A1

(12) EUROPÄISCHE PATENTANMELDUNG

(21) Anmeldenummer: 80104690.5

(22) Anmeldetag: 08.08.80

(51) Int. Cl.³: G 06 F 11/22
G 06 F 11/30

(30) Priorität: 13.08.79 DE 2932749

(43) Veröffentlichungstag der Anmeldung:
18.02.81 Patentblatt 81/7

(84) Benannte Vertragsstaaten:
AT BE CH FR GB IT LI NL SE

(71) Anmelder: SIEMENS AKTIENGESELLSCHAFT Berlin
und München
Postfach 22 02 61
D-8000 München 22(DE)

(72) Erfinder: Thinschmidt, Hans
Kreuzlingerstrasse 52c
D-8034 Germering(DE)

(72) Erfinder: Scheiterer, Eduard
Albert-Rosshaupter-Strasse 64
D-8000 München 70(DE)

(54) Prüfeinrichtung zur Fehldiagnose in Mehrrechner-Systemen, insbesondere in Multimikrocomputer-Systemen.

(57) Die Erfindung betrifft eine Prüfeinrichtung zur Fehlerdiagnose in Mehrrechner-Systemen, insbesondere in Multimikrocomputer-Systemen, bei der bei der Fehlerdiagnose zu berücksichtigende Signalspannungen auf dem Systembus durch von diesen mittelbar gesteuerte Anzeigeeinrichtungen als optische Signale erkennbar gemacht werden. Für die Fehlerdiagnose bzw. Fehlereingrenzung standen bisher Oszillographen, Emulatoren und Logik-Analysatoren als Hilfsmittel zur Verfügung. Bekanntlich ist zum Interpretieren der Bussignale eines Mikrocomputers ein Oszillograph wenig, ein Emulator gar nicht geeignet. Ein Logik-Analysator müßte mit der Anzahl seiner Kanäle die volle Busbreite abdecken. Der Erfindung liegt die Aufgabe zugrunde, eine Prüfeinrichtung zu schaffen, mit deren Hilfe die oben angegebenen Nachteile bzw. Mängel beseitigt werden können. Zur Lösung dieser Aufgabe wird eine Prüfeinrichtung vorgeschlagen, bei der alle Bussignale entsprechend ihrem jeweils momentanen Zustand und das jeweils zuletzt aktiv gewesene Bussignal einer Bussignalgruppe, beispielsweise die Interruptsignale betreffend, optisch angezeigt werden. Adreß- und Dateninformationen werden mit Hexadezimal-Anzeige-Bausteinen sichtbar gemacht. Nadelimpulse werden mittels retriggerbarer Monoflops zeitlich gedehnt angezeigt.

FIG 1

SIEMENS AKTIENGESELLSCHAFT          Unser Zeichen

Berlin und München                 VPA  79 P 7 1 1 8

Prüfeinrichtung zur Fehlerdiagnose in Mehrrechner-
Systemen, insbesondere in Multimikrocomputer-Systemen

Die Erfindung betrifft eine Prüfeinrichtung zur Fehlerdiagnose in Mehrrechner-Systemen, insbesondere in Multimikrocomputer-Systemen, bei der bei der Fehlerdiagnose
zu berücksichtigende Signalspannungen auf dem Systembus
durch von diesen mittelbar gesteuerte Anzeigeeinrichtungen als optische Signale erkennbar gemacht werden.

Bei Mehrrechner-Systemen, insbesondere bei solchen,
die mit Mikrocomputern ausgeführt sind, ist es sowohl
im praktischen Betrieb als auch besonders in der Entwicklungsphase notwendig, bei auftretenden Fehlern möglichst schnell die Zustände aller Mikrocomputer zu erkennen. Dabei ist fortlaufend zu klären, welcher oder
welche Mikrocomputer fehlerhaft arbeiten, und ob die
Ursache für ein fehlerhaftes Verhalten in der Hardware

Pap 1 The / 7.8.1979

0024045

oder der Software zu suchen ist. Einen wesentlichen Hinweis zur Klärung dieser Frage liefert die Beobachtung aller Bussignale.

Für diese Zwecke standen bisher Oszillographen, Emulatoren und Logik-Analysatoren als Hilfsmittel zur Verfügung. Bekanntlich ist zum Interpretieren der Bussignale eines Mikrocomputers ein Oszillograph wenig, ein Emulator gar nicht geeignet. Ein Logik-Analysator müßte mit der Anzahl seiner Kanäle die volle Busbreite (Daten-, Adressen-, Steuer-, Interrupt-Leitungen) abdecken. Das wären in ausgeführten Beispielen für Mehrrechner-Systemen etwa vierzig Daten- und etwa zehn Triggereingänge, wobei die Möglichkeit bestehen muß, diese Eingänge in drei voneinander unabhängig arbeitende Gruppen zu unterteilen. Diese bestehende Bedingung und die Wahl des entsprechenden Zeitrasters je Gruppe können den Einsatz von zwei oder sogar drei Logik-Analysatoren erforderlich machen. Es ist darüber hinaus zeitaufwendig, für jede Fehlersuche den Logik-Analysator neu zu programmieren. Außerdem muß für reproduzierbare Ergebnisse die Programmierung dokumentiert werden. Dieser Aufwand muß u.U. für jeden Mikrocomputer des betreffenden Mehrrechner-Systems getrieben werden.

Der Erfindung liegt die Aufgabe zugrunde, eine Prüfeinrichtung zur Fehlerdiagnose in Mehrrechner-Systemen zu schaffen, mit deren Hilfe die oben angegebenen Nachteile bzw. Mängel beseitigt werden können.

Die der Erfindung zugrundeliegende Aufgabe wird durch eine Prüfeinrichtung zur Fehlerdiagnose in Mehrrechner-Systemen, insbesondere in Multimikrocomputer-System gelöst, bei der bei der Fehlerdiagnose zu berücksichtigende Signalspannungen auf dem Systembus durch von diesen mittelbar gesteuerte Anzeigeeinrichtungen als optischen Signale erkennbar gemacht werden. Die erfindungsgemäße Prüfeinrichtung ist dadurch gekennzeichnet, daß eine Entkopplungseinrichtung zum Verbinden einer Auswerte-/Steuerlogik mit dem Systembus vorgesehen ist, daß eine Adreß-/Dateninformations-Anzeigeeinrichtung, eine Zugriffssignal-Anzeigeeinrichtung, eine Bussteuersignal-Anzeigeeinrichtung und eine Interruptsignal-Anzeigeeinrichtung vorgesehen sind, daß zumindest ein an sich bekannter Vergleicherbaustein vorgesehen ist, dessen einer Gruppe von Signaleingängen eine einer vorwählbaren, mittels eines Selektionsschalters einstellbaren Selektionsadresse entsprechende Binärinformation und dessen einer zweiten Gruppe von Signaleingängen alle auf der Adreßleitung des Systembus auftretenden Adreßinformationen zugeführt werden, daß der Vergleicherbaustein bei Gleichheit der der Selektionsadresse entsprechenden Binärinformation mit einer auftretenden Adreßinformation ein Ausgangssignal abgibt, mittels dessen ein gleichzeitig auf einer Zugriffssignal-Busleitung (z.B. MRDC) auftretendes Zugriffssignal über zumindest ein Verknüpfungsglied für die Prüfeinrichtung wirksam geschaltet wird, daß die Adreß-Dateninformations-Anzeigeeinrichtung mittels eines derart wirksam geschalteten Zugriffssignals freigegeben wird und daß die Zugriffssignal-Anzeigeeinrichtung und die Interrupt-Anzeigeeinrichtung jeweils Anzeigemittel einer ersten Gruppe zum Erkennbarmachen der momentanen Zustände aller Zugriffssignal-Busleitungen und aller Interruptsignal-leitungen und jeweils eine zweite Gruppe von Anzeigemitteln zum Erkennbarmachen des jeweils zuletzt aktiven Zugriffssignals und/oder Interruptsignals enthalten.

Die Erfindung bietet den Vorteil, daß alle Bussignale gleichzeitig sichtbar gemacht werden können. Bei den Zugriffs- und Interruptsignalen werden vorteilhafterweise sowohl die jeweils momentanen Zustände wie auch das jeweils zuletzt aktive Signal der jeweils betreffenden Signalgruppe angezeigt. Die einzelnen Anzeigeeinrichtungen können darüber hinaus wahlweise durch eine bestimmte, vorwählbare Adressierung freigegeben werden, so daß eine einfache Eingrenzungsmöglichkeit von Fehlerquellen gegeben ist. Die erfindungsgemäße Prüfeinrichtung beeinflußt darüber hinaus vorteilhafterweise das zu prüfende System in keiner Weise.

Eine Weiterbildung der Erfindung ist dadurch gekennzeichnet, daß ein erster Vergleicherbaustein mit einem ersten Selektionsschalter, ein zweiter Vergleicherbaustein mit einem zweiten Selektionsschalter, ein dritter Vergleicherbaustein mit einem dritten Selektionsschalter und ein vierter Vergleicherbaustein mit einem vierten Selektionsschalter vorgesehen sind und daß die Vergleicherbausteine über ihrer jeweiligen Hilfssignaleingänge und Signalausgänge derart zusammengeschaltet sind, daß ein gemeinsames Vergleicherbaustein-Ausgangssignal in dem Falle von einem der Vergleicherbausteine abgegeben wird, wenn eine über alle zu den ersten Gruppen von Signaleingängen gehörenden Signaleingänge reichende Binärinformation mit einer über alle zu den zweiten Gruppen von Signaleingängen gehörenden Signaleingänge reichende Adreßinformation gleich ist.

Die Weiterbildung der Erfindung bietet den Vorteil, daß die erfindungsgemäße Prüfeinrichtung in beliebigen Mehrrechner-Systemen mit beliebig breiter Adreßinformation einsetzbar ist.

Eine andere Weiterbildung der Erfindung ist dadurch gekennzeichnet, daß ein Selektionszähler vorgesehen ist, mittels dessen die Anzahl von einer vorgewählten Selektionsadresse entsprechenden Adressierungsereignissen bestimmbar ist, und daß ein Vorwählschalter vorgesehen ist, mittels dessen die Anzahl der Adressierungsereignisse dadurch vorwählbar ist, daß eine die vorzuwählende Anzahl repräsentierende Binärinformation über die Schaltstellen des Vorwählschalters an die bei dem vorgesehenen Selektionszähler vorhandenen Vorwählsignaleingänge geführt wird.

Diese Weiterbildung der Erfindung ist insofern vorteilhaft, als eine vom Fehlersuchenden bestimmbare Anzahl von Adressierungsereignissen für die betreffende Selektionsadresse überwacht werden kann. Ein Über- oder Unterschreiten dieser bestimmten Anzahl läßt weitergehende Rückschlüsse auf mögliche Fehlerquellen zu.

Die Erfindung ist außerdem derart weitergebildet, daß ein Umschalter vorgesehen ist, mittels dessen die Betriebsart des Selektionszählers umschaltbar ist, so daß vorteilhafterweise entweder ein Abzählen oder ein Durchzählen bis zu einer mittels des Vorwählschalters vorzuwählenden Anzahl von Adressierungsereignissen ermöglicht ist.

Eine andere Weiterbildung der Erfindung ist dadurch gekennzeichnet, daß mehrere Bussteuersignal-Anzeigemittel innerhalb der Bussteuersignal-Anzeigeeinrichtung vorgesehen sind, denen jeweils individuell zugeordnete retriggerbare Monoflops mittelbar vorgeschaltet sind, mittels derer auf die Bussteuersignale übertragenden Bussteuersignal-Leitungen auftretende kurze Einzelreaktionen, wie Nadelimpulse, erfaßt und zeitlich gedehnt erkennbar gemacht werden können.

Vorteilhaft an dieser Weiterbildung der Erfindung ist, daß auch dynamische Störquellen, die u.U. einmalig innerhalb eines Prüfvorganges wirksam werden, unter bestimmten günstigen Umständen ermittelt werden können.

Die Erfindung ist außerdem dahingehend weitergebildet, daß ein Detektionsschalter vorgesehen ist, daß den Bussteuersignal-Leitungen jeweils individuell zugeordnete Exklusiv-ODER-Glieder vorgesehen sind und daß einem jeweils ersten Signaleingang der Exklusiv-ODER-Glieder über die betreffende Bussteuersignal-Leitung gesendete Signale und einem jeweils zweiten Signaleingang der Exklusiv-ODER-Glieder mittels des Detektionsschalters entweder ein Dauersignal mit dem Pegel "H" oder dem Pegel "L" zuführbar sind, so daß vorteilhafterweise kurze Einzelreaktionen auf den betreffenden Bussteuersignal-Leitungen mit dem Signalpegel "H" oder dem Signalpegel "L" detektierbar sind.

Im folgenden wird die Erfindung an Hand mehrerer, ein Ausführungsbeispiel für die Erfindung betreffender Figuren näher erläutert.

Figur 1 zeigt in Form eines Übersichtschaltplans die grundsätzliche Struktur der erfindungsgemäßen Prüfeinrichtung mit einer ersten Auswerte-/Steuerlogik 1, einer Adreß-/Dateninformations-Anzeigeeinrichtung 11, einer Zugriffssignal-Anzeigeeinrichtung 12, einer zweiten Auswerte-/Steuerlogik 2, einer Bussteuersignal-Anzeigeeinrichtung 21, einer dritten Auswerte-/Steuerlogik 3, einer Interruptsignal-Anzeigeeinrichtung 31 und einer

0024045

Entkopplungseinrichtung 4, über die die erste,
zweite und dritte Auswerte-/Steuerlogik mit dem
Systembus 5 eines zu prüfenden Mehrrechner-Systems
verbunden sind.

Figur 2 zeigt den schaltungstechnischen Aufbau eines
Ausführungsbeispiels für einen ersten Teil der
ersten Auswerte-/Steuerlogik 1, die Adreß-/Daten-
informations-Anzeigeeinrichtung 11 und die Zugriffssignal-Anzeigeeinrichtung 12.

Figur 3 zeigt den schaltungstechnischen Aufbau eines
Ausführungsbeispiels für einen zweiten Teil der
ersten Auswerte-/Steuerlogik 1.

Figur 4 zeigt den schaltungstechnischen Aufbau eines
Ausführungsbeispiels für die zweite Auswerte-/
Steuerlogik 2 und die Bussteuersignal-Anzeigeeinrichtung 21.

Figur 5 zeigt den schaltungstechnischen Aufbau eines
Ausführungsbeispiels für die dritte Auswerte-/
Steuerlogik 3 und die Interruptsignal-Anzeigeeinrichtung 31.

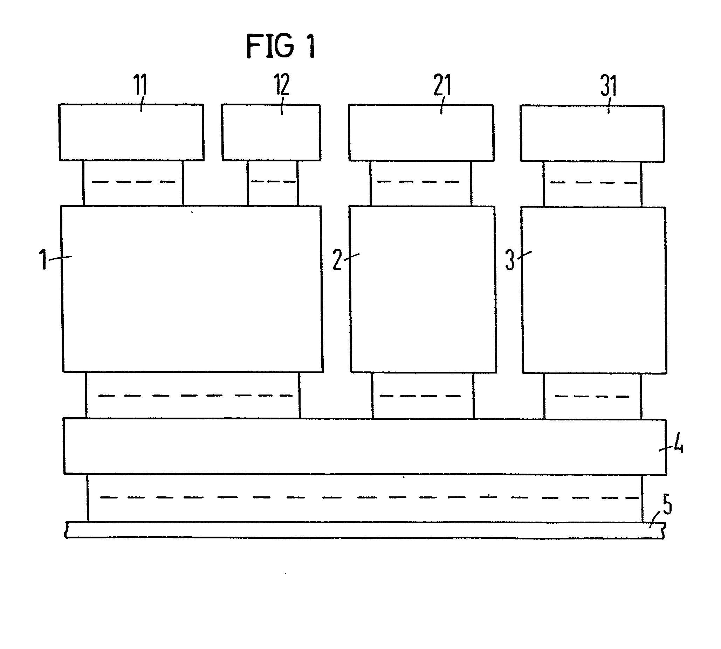

Wie bereits erläutert, zeigt Figur 1 in Form eines Übersichtschaltplans die grundsätzliche Struktur der erfindungsgemäßen Prüfeinrichtung mit einer ersten Auswerte-/
Steuerlogik 1, einer Adreß-/Dateninformations-Anzeigeeinrichtung 11, einer Zugriffssignal-Anzeigeeinrichtung
12, einer zweiten Auswerte-/Steuerlogik 2, einer Bussteuersignal-Anzeigeeinrichtung 21, einer dritten Auswerte-/Steuerlogik 3, einer Interruptsignal-Anzeigeeinrichtung 31 und einer Entkopplungseinrichtung 4,
über die die erste, zweite und dritte Auswerte-/Steuerlogik mit dem Systembus 5 eines zu prüfenden Mehrrechner-
Systems verbunden sind.

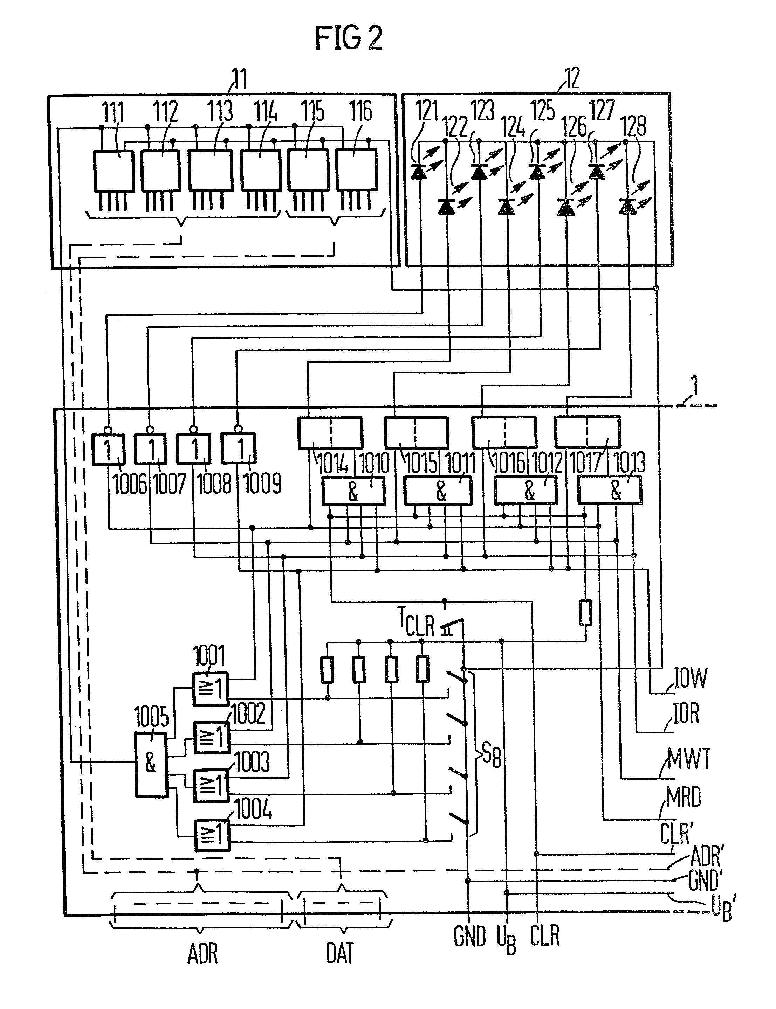

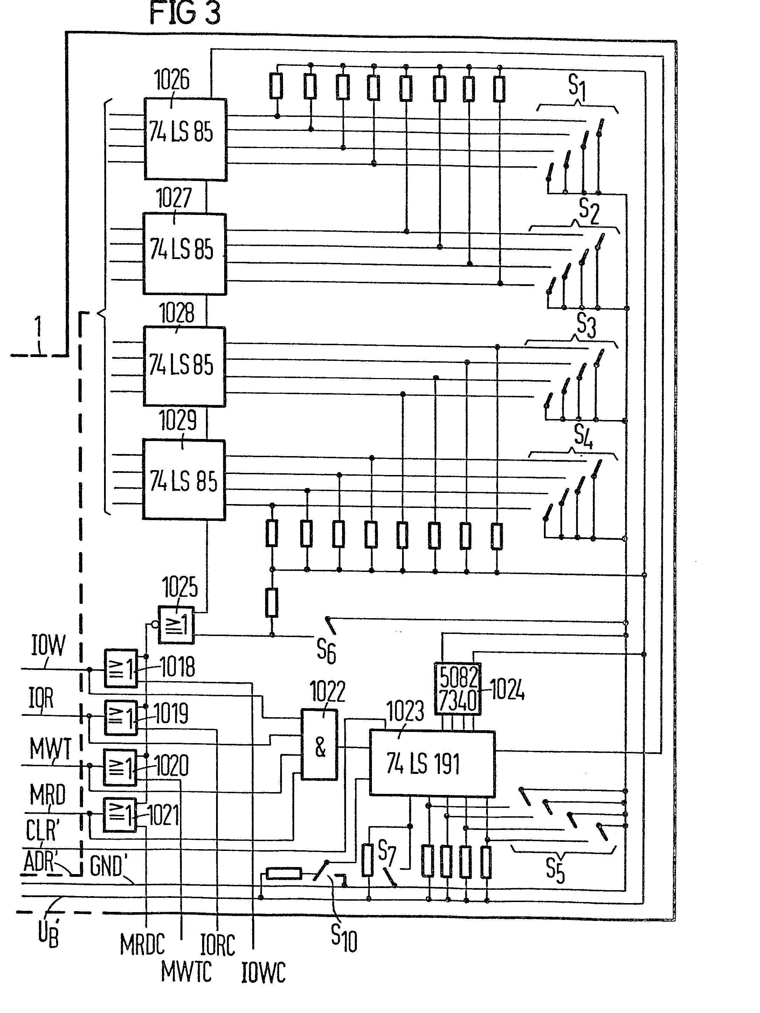

Die Figuren 2 und 3 zeigen, wie ebenfalls bereits erläutert, den schaltungstechnischen Aufbau eines Ausführungsbeispiels für einen ersten Teil der ersten Auswerte-/Steuerlogik 1, die Adreß-/Dateninformations-An-
zeigeeinrichtung 11 und die Zugriffssignal-Anzeigeeinrichtung 12, sowie den schaltungstechnischen Aufbau
eines Ausführungsbeispiels für einen zweiten Teil der
ersten Auswerte-/Steuerlogik 1.

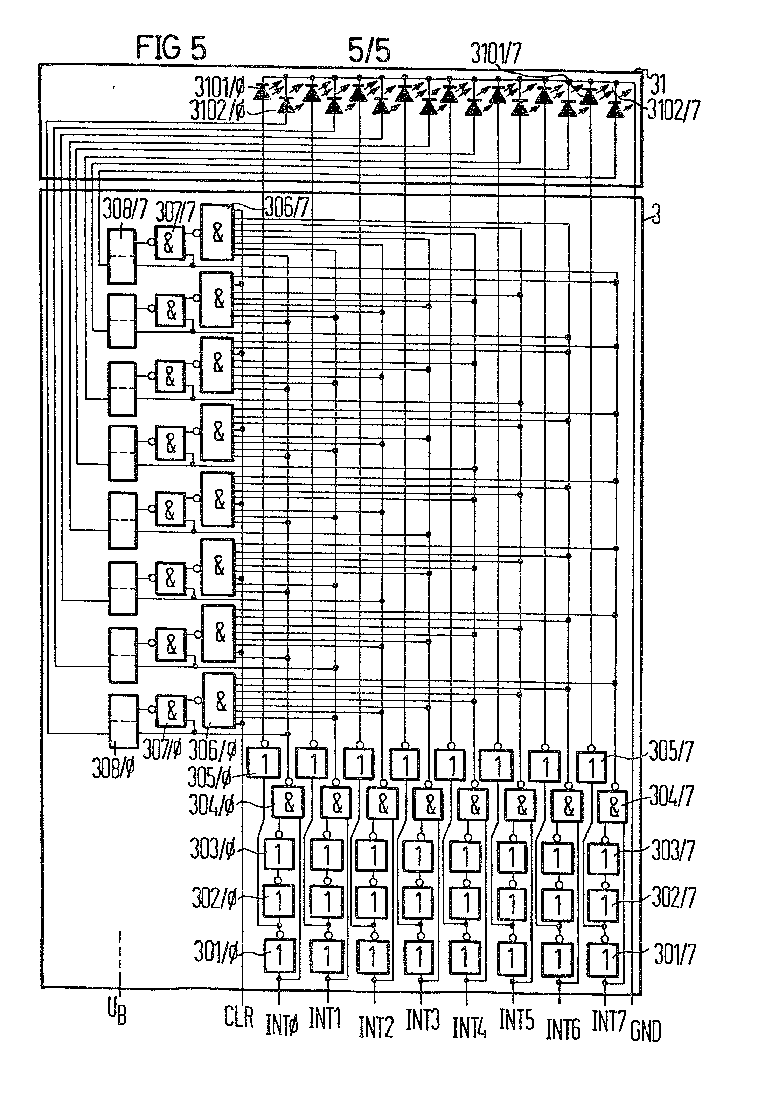

Die erste Auswerte-/Steuerlogik 1 ist, wie aus Figur 1
ersichtlich, über die Entkopplungseinrichtung 4 mit
Adreßleitungen ADR, Datenleitungen DAT, vgl. Figur 2,
und mehreren Zugriffssignal-Busleitungen, nämlich MRDC,
MWTC, IORC, IOWC, vgl. Figur 3, mit dem Systembus 5
verbunden. Außerdem ist die erste Auswerte-/Steuerlogik 1 mit einer Betriebsspannung über eine Betriebsspannungsleitung $U_B$ und eine Erdleitung GDN verbunden.
Eine später zu erläuternde Rückstelltaste $T_{CLR}$ wirkt
über eine Rückstelleitung CLR auch auf die dritte Auswerte-/Steuerlogik 3 ein, vgl. Figur 5. Der erste Teil
der ersten Auswerte-/Steuerlogik 1, vgl. Figur 2, ist
über mehrere Zugriffssignalleitungen, nämlich IOW, IOR,
MWT, MRD sowie eine interne Rückstelleitung CLR', eine
interne Adreßleitung ADR', eine interne Betriebsspannungsleitung $U_B$' und eine interne Erdleitung GND' mit
dem zweiten Teil der ersten Auswerte-/Steuerlogik 1,
vgl. Figur 3, verbunden. Die Adreßleitungen ADR und die
Datenleitungen DAT sind außerdem mit ihnen entsprechenden Signaleingängen von Hexadezimal-Anzeigebausteinen
111, 112, 113, 114, 115, 116 innerhalb der Adressen-/
Dateninformations-Anzeigeeinrichtung 11 verbunden. Die
Betriebsspannungsversorgung der genannten Hexadezimal-
Anzeigebausteine erfolgt zu n einen über die Betriebserde GND und zum anderen über ein aus einem UND-Glied 1005 und mehreren ODER-Gliedern 1001, 1002, 1003, 1004 bestehendes Verknüpfungsnetzwerk. Die Wirkungsweise solcher Verknüpfungsnetzwerke ist an sich bekannt. Die jeweiligen Signalausgänge der erwähnten ODER-Glieder sind an die Signaleingänge des erwähnten UND-Gliedes angeschlossen. Der Signalausgang des UND-Gliedes ist an die jeweils betreffende Betriebsspannungsklemme aller Hexadezimal-Anzeigebausteine angeschlossen. Über die Zugriffssignalleitungen IOW, IOR, MWT, MRD vom zweiten Teil der ersten Auswerte-/Steuerlogik 1 gesendete vorverarbeitete Zugriffssignale werden den jeweils ersten Signaleingängen der genannten ODER-Glieder zugeführt. Den jeweils zweiten Signaleingängen der genannten ODER-Glie - der kann über Widerstände das Betriebsspannungspotential $U_B$, was dem Signalpegel "H" entspricht, oder wahlweise über einen Freigabeschalter $S_8$ Erdpotential, was dem Signalpegel "L" entspricht, zugeführt werden. Mit diesem genannten Freigabeschalter $S_8$ kann bestimmt werden, mit welcher Art von Zugriffssignal die Adressen-/Dateninformations-Anzeigeeinrichtung 11 freigegeben werden soll. Die Zugriffssignalleitungen IOW, IOR, MWT, MRD sind außerdem über NICHT-Glieder 1006, 1007, 1008, 1009 an Anzeigemittel, nämlich LED einer ersten Gruppe 121, 123, 125, 127 innerhalb der Zugriffssignal-Anzeigeeinrichtung 12 geführt. Diese Anzeigemittel sind mit ihren jeweiligen zweiten Anschlüssen auf Erdpotential gelegt. Erfindungsgemäß sind diese Anzeigemittel der ersten Gruppe als LED einer ersten Lichtfarbentype, vorzugsweise grünemmitierende LED, ausgeführt. Eine zweite Gruppe von Anzeigemitteln, nämlich 122, 124, 126, 128 innerhalb der Zugriffssignal-Anzeigeeinrichtung 12 ist mit LED einer zweiten Lichtfarbentype, vorzugsweise rotemmitierenden LED, ausgeführt. Die Anzeigemittel der ersten Gruppe zeigen jeweils den momentanen Zustand des betreffenden Zugriffssignals an. Die Anzeigemittel der zweiten Gruppe zeigen das jeweils zuletzt aktiv gewesene Zugriffssignal an. Dazu sind diese Anzeigemittel
an die jeweils ersten Signalausgänge ihnen individuell
zugeordneter Flipflops, nämlich 1014, 1015, 1016, 1017
gelegt. Die jeweils zweiten Anschlüsse der LED dieser
zweiten Gruppe sind ebenfalls auf Erdpotential gelegt.
Zur Erfüllung dieser genannten Aufgabe, nämlich die Anzeige des jeweils zuletzt aktiv gewesenen Zugriffssignals, sind die Anzeigemittel der zweiten Gruppe 122,
124, 126, 128 über die genannten Flipflops ein-bzw.
ausschaltbar, wobei der jeweilige Setzeingang eines
Flipflop mit der zugehörigen Zugriffssignalleitung und
der jeweilige Rücksetzeingang jedes Flipflop mit dem
Signalausgang eines jeweils ihm individuell zugeordneten UND-Gliedes, nämlich 1010, 1011, 1012, 1013 verbunden ist. Diese genannten UND-Glieder sind mit jeweils
einem Signaleingang ständig über einen ihnen gemeinsam
zugeordneten Vorwiderstand auf Betriebsspannungspotential $U_B$, was dem Signalpegel "H" entspricht, gelegt.
Die jeweils weiteren Signaleingänge der genannten UND-
Glieder sind jeweils mit den jeweils verbleibenden Zugriffssignalleitungen verbunden, die jeweils auf die
Setzeingänge aller weiteren Flipflops geschaltet sind.
Die aus den Flipflops 1014 ... 1017 und den UND-Gliedern
1010 ... 1013 gebildete Verknüpfungsschaltung erfüllt
demnach in an sich bekannter Weise die eingangs erwähnte
Aufgabe.

Im zweiten Teil der ersten Auswerte-/Steuerlogik 1, vgl.
Figur 3, sind die Zugriffssignal-Busleitungen MRDC, MWTC,
IORC, IOWC jeweils auf einen ersten Signaleingang eines
jeder Leitung zugeordneten ODER-Gliedes 1018, 1019, 1020,
1021 gelegt. Die jeweils zweiten Signaleingänge dieser
ODER-Glieder sind gemeinsam auf den Signalausgang eines
NOR-Gliedes 1025 gelegt. An die jeweiligen Signalausgänge der ODER-Glieder 1018, 1019, 1020, 1021 sind die betreffenden Zugriffssignalleitungen IOW, IOR, MWT, MRD sowie individuelle Signaleingänge eines weiteren UND-Gliedes 1022 angeschlossen. Der Signalausgang dieses UND-Gliedes 1022 ist mit einem Aktivierungseingang eines Selektionszählers 1023 verbunden. Der Zähleingang dieses Selektionszählers ist an den Signalausgang des letzten einer Gruppe von hinsichtlich ihrer Signaleingänge bzw. Signalausgänge in Reihe geschalteten Vergleicher-Bausteine 1026, 1027, 1028, 1029 angeschlossen. Diese an sich bekannten Vergleicherbausteine haben jeweils zwei Gruppen von Signaleingängen. An die Signaleingänge der ersten Gruppe sind die Adern der internen Adreßleitung ADR', die ihrerseits an die Adreßleitung ADR des Systembus 5 geführt ist, gelegt. An die Signaleingänge der jeweils zweiten Gruppe ist über individuelle Vorwiderstände das Betriebsspannungspotential $U_B$ über die interne Betriebsspannungsleitung $U_B$' gelegt. Diese Anordnung bedeutet, daß den Signaleingängen der jeweils zweiten Gruppen im Regelfall Signale mit dem Pegel "H" zugeführt werden. Die Signaleingänge der zweiten Gruppen der Vergleicher-Bausteine können jedoch wahlweise über ihnen individuell zugeordnete Selektionsschalter S1, S2, S3, S4 einzeln auf Erdpotential, nämlich den Signalpegel "L", gelegt werden. Damit ist die Möglichkeit gegeben, eine bestimmte Adressierung, nämlich eine einer solchen Adressierung zugehörige Bitkombination mit Hilfe der Vergleicher-Bausteine und der Selektionsschalter zu selektieren. Der Selektionszähler 1023, dem ein Zähleranzeige-Baustein 1024, der vorzugsweise ebenfalls als Hexadezimal-Anzeigebaustein ausgeführt ist, zugeordnet ist, zählt die Anzahl der Selektionsadressen, die der Prüfeinrichtung zugeführt werden. Mit Hilfe eines Vorwählschalters S5 ist die Anzahl der Adressierungsereignisse dadurch vorwählbar, daß eine die vorzuwählende Anzahl repräsentierende Binärinformation über die Schaltstellen des Vorwählschalters S5 an die bei dem vorgesehenen Selektionszähler vorhandenen Vorwählsignaleingänge geführt wird. Dies wird dadurch erreicht, daß diesen Vorwählsignaleingängen in der Regel über individuell zugeordnete Vorwiderstände Betriebsspannungspotential, was dem Signalpegel "H" entspricht, und wahlweise Erdpotential, was dem Signalpegel "L" entspricht, zuführbar sind. Mit Hilfe eines Betriebsartenschalters S6 können die für eine Adreßselektion vorgesehenen Schaltungselemente wirksam oder unwirksam geschaltet werden. Das geschieht dadurch, daß dem ersten Signaleingang des bereits erwähnten NOR-Gliedes 1025 wahlweise Erdpotential oder Betriebsspannungspotential, was dem Signalpegel "L" oder dem Signalpegel "H" entspricht, zuführbar ist. Der zweite Signaleingang des NOR-Gliedes 1025 ist mit einem Signalausgang des ersten aller in Reihe geschalteten Vergleicher-Bausteine, nämlich 1029, verbunden. Über diese zuletzt genannte Verbindung wird erreicht, daß die Zugriffssignalleitungen IOW, IOR, MWT, MRD je nach Stellung des Betriebsartenschalters S6 entweder nur dann eingeschaltet werden, wenn der Anordnung der Vergleicherbausteine ein einer bei ihnen durch die Selektionsschalter S1, S2, S3, S4 voreingestellten Selektionsadresse entsprechendes Bitmuster über die interne Adressenleitung ADR' zugeführt wird oder der Betriebsartenschalter S6 geschlossen ist. Mit Hilfe eines Aktivierungsschalters S7 kann der Selektionszähler 1023 aktiv oder inaktiv geschaltet werden. Es ist außerdem ein Umschalter S10 vorgesehen, mittels dessen die Betriebsart des Selektionszählers 1023 umschaltbar ist, so daß entweder ein Abzählen oder ein Durchzählen bis zu einer mittels des Vorwählschalters S5 vorzuwählenden Anzahl von Adressierungsereignissen ermöglicht ist. Mit Hilfe der in Figur 2 gezeigten Rückstelltaste $T_{CLR}$ sind alle Flipflops 1014, 1015, 1016, 1017 mittelbar über die
UND-Glieder 1010, 1011, 1012, 1013, vgl. Figur 2, rücksetzbar und im Zusammenhang mit der internen Rückstellleitung CLR' der Selektionszähler 1023, vgl. Figur 3,
mit dem mittels des Vorwählschalters S5 vorgewählten
Zählwert ladbar.

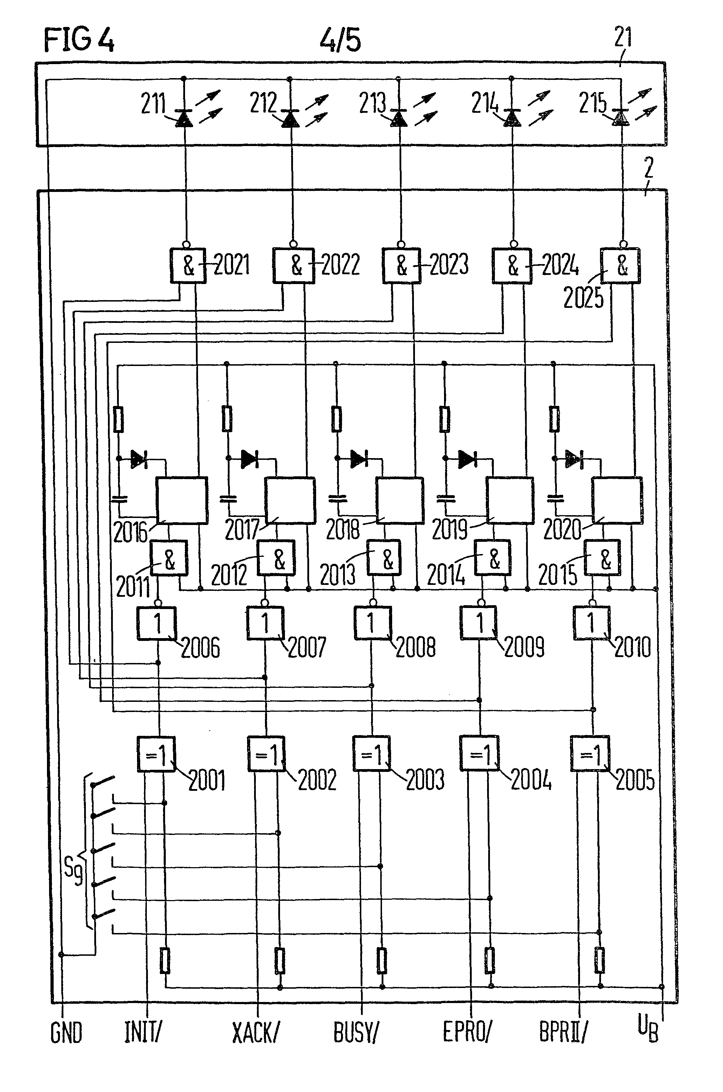

Figur 4 zeigt, wie bereits erläutert, den schaltungstechnischen Aufbau eines Ausführungsbeispiels für die
zweite Auswerte-Steuerlogik 2 und die Bussteuersignal-Anzeigeeinrichtung 21. Dieser zweiten Auswerte-/
Steuerlogik 2 sind alle Bussteuersignalleitungen INIT/,
XACK/, BUSY/, EPRO/, BPRII/ sowie die Betriebsspannungsleitung $U_B$ und die Erdleitung GND zugeführt. Die
genannten Bussteuersignalleitungen sind jeweils auf
einen ersten Signaleingang eines jeder dieser Leitungen
individuell zugeordneten Exklusiv-ODER-Gliedes 2001,
2002, 2003, 2004, 2005 gelegt. An die jeweils zweiten
Signaleingänge dieser Exklusiv-ODER-Glieder ist wahlweise jeweils das Betriebsspannungspotential $U_B$, was dem
Signalpegel "H" entspricht, oder über einen Detektionsschalter S9 Erdpotential, was dem Signalpegel "L" entspricht, legbar. Die Signalausgänge der genannten Exklusiv-ODER-Glieder sind jeweils zum einen an den Signaleingang eines jeweils individuell zugeordneten NICHT-
Gliedes 2006, 2007, 2008, 2009, 2010 und an jeweils
den ersten Signaleingang eines ebenfalls individuell
zugeordneten NAND-Gliedes 2021, 2022, 2023, 2024, 2025
gelegt. Die jeweils zweiten Signaleingänge dieser genannten NAND-Glieder sind auf jeweils einen Signalausgang eines individuell zugeordneten retriggerbaren Monoflop 2016, 2017, 2018, 2019, 2020 gelegt. Ein jeweils
erster Signaleingang eines solchen retriggerbaren Monoflop ist fest mit dem Betriebsspannungspotential $U_B$
und ein jeweils zweiter Signaleingang dieser retriggerbaren Monoflops ist mit dem Signalausgang eines jeweils individuell zugeordneten weiteren UND-Gliedes 2011, 2012, 2013, 2014, 2015 gelegt. Von diesen weiteren UND-Gliedern 2011, 2012, 2013, 2014, 2015 ist jeweils ein Signaleingang ebenfalls fest auf das Betriebsspannungspotential $U_B$ gelegt. Der jeweils andere Signaleingang ist mit dem Signalausgang des jeweils individuell zugeordneten, bereits erwähnten NICHT-Gliedes 2006 ... 2010 verbunden. Den retriggerbaren Monoflops 2016 ... 2020 sind an sich bekannte Integrationsglieder, jeweils aus einem Widerstand, einer Diode und einer Kapazität bestehend, zugeordnet. Die Signalausgänge der zuvor erwähnten NAND-Glieder 2021 ... 2025 sind auf individuell angeschaltete Bussteuersignal-Anzeigemittel 211, 212, 213, 214, 215 innerhalb der Bussteuersignal-Anzeigeeinrichtung 21 gelegt. Die jeweils zweiten Anschlüsse dieser in dem gezeigten Ausführungsbeispiel als LED ausgeführten Anzeigemittel sind gemeinsam auf Erdpotential gelegt. Mit Hilfe der genannten retriggerbaren Monoflops 2016 ... 2020 ist es möglich, daß auf den die Bussteuersignale übertragenden Bussteuersignalleitungen INIT/, XACK/, BUSY/, EPRO/, BPRII/ auftretende kurze Einzelreaktionen, wie Nadelimpulse, erfaßt und zeitlich gedehnt erkennbar gemacht werden können.

Figur 5 zeigt, wie bereits erläutert, den schaltungstechnischen Aufbau eines Ausführungsbeispiels für die dritte Auswerte-Steuerlogik 3 und die Interruptsignal-Anzeigeeinrichtung 31. Dieser dritten Auswerte-/Steuerlogik 3 sind alle Interruptleitungen des zu prüfenden Systems, INT∅, INT1, INT2, INT3, INT4, INT5, INT6, INT7 sowie die Betriebsspannungsleitung $U_B$, die Erdleitung GND und die Rückstelleitung CLR zugeführt. Die Interruptleitungen werden jeweils über ihnen individuell zugeordnete Reihenschaltungen von NICHT-Gliedern

301/∅ ... 301/7, 302/∅ ... 302/7, 303/∅ ... 303/7 in der gezeigten Weise auf jeweils einen ersten Signaleingang eines einer Interruptleitung individuell zugeordneten NAND-Gliedes 304/∅ ... 304/7 geführt. Dem jeweils zweiten Signaleingang dieser zuletzt genannten NAND-Glieder werden die Interruptleitungen jeweils ebenfalls direkt zugeführt. Mit Hilfe dieser Schaltungsanordnung wird erreicht, daß die Interruptsignale gegenüber den Adressierungs-, Zugriffs- und Bussteuersignalen verzögert wirksam geschaltet werden. An die Signalausgänge der NAND-Glieder 304/∅ ... 304/7 sind jeweils Signaleingänge von weiteren NAND-Gliedern 306/∅ ... 306/7, die allen benachbarten Interruptleitungen individuell zugeordnet sind, gelegt. Außerdem ist der Signalausgang jedes der genannten NAND-Glieder 304/∅ ... 304/7 jeweils mit dem Setzeingang eines der betreffenden Interruptleitung individuell zugeordneten Flipflop 308/∅ ... 308/7 verbunden. Der Signalausgang eines solchen NAND-Gliedes 304/∅ ... 304/7 ist außerdem mit einem ersten Signaleingang eines ebenfalls der betreffenden Interruptleitung individuell zugeordneten weiteren NAND-Gliedes 307/∅ ... 307/7 verbunden. Der jeweils zweite Signaleingang dieser weiteren NAND-Glieder ist jeweils mit dem Signalausgang der zuvor erwähnten NAND-Glieder 306/∅ ... 306/7 verbunden. Der Signalausgang eines jeden der NAND-Glieder 307/∅ ... 307/7 ist jeweils mit dem Rücksetzeingang des der betreffenden Interruptleitung zugeordneten Flipflop 308/∅ ... 308/7 verbunden. Die Signalausgänge der Flipflop 308/∅ ... 308/7 sind jeweils mit den ersten Anschlüssen von Anzeigemitteln einer zweiten Gruppe 3102/∅ ... 3102/7 innerhalb der Interruptsignal-Anzeigeeinrichtung 31 verbunden. Diese genannten Anzeigemittel, die in dem gezeigten Ausführungsbeispiel als LED ausgeführt sind, sind ebenso wie weitere Anzeigemittel einer ersten Gruppe, nämlich 3101/∅ ...

3101/7 den Interruptleitungen individuell zugeordnet. Diese zuletzt genannten Anzeigemittel sind ebenfalls in dem gezeigten Ausführungsbeispiel als LED ausgeführt, deren erste Anschlüsse mit weiteren, den Interrupt-leitungen individuell zugeordneten NICHT-Gliedern 305/Ø ... 305/7 verbunden. Die zweiten Anschlüsse aller An-zeigemittel 3101/Ø ... 3101/7, 3102/.Ø ... 3102/7 sind gemeinsam auf Erdpotential gelegt. Die Signaleingänge der zuletzt genannten NICHT-Glieder 305/Ø ... 305/7 sind in dem gezeigten Ausführungsbeispiel mit den Signalausgängen des jeweils ersten NICHT-Gliedes 301/Ø ... 301/7, das einer Interruptleitung individuell zugeordnet ist, verbunden. Die in der Interruptsignal-Anzeigeeinrichtung 31 enthaltenen Anzeigemittel der ersten Gruppe 3101/Ø ... 3101/7 sind als LED einer ersten Lichtfarbentype, vorzugsweise grünemmitierende LED, und die Anzeigemittel der zweiten Gruppe 3102/Ø ... 3102/7 als LED einer zweiten Lichtfarbentype, vorzugsweise rot-emmitierende LED, ausgeführt. Die Anzeigemittel 3101/Ø ... 3101/7 zeigen die momentanen Zustände der Interruptsignalleitungen an. Die Anzeigemittel 3102/Ø ... 3102/7 zeigen jeweils das zuletzt aktiv gewesene Interruptsignal an. Die beschriebene Verknüpfungsanordnung ermöglicht in bekannter Weise diese Schaltungsfunktion.

Die Flipflops 308/Ø ... 308/7 können mittelbar, nämlich über die NAND-Glieder 306/Ø ... 306/7 bzw. 307/Ø ... 307/7 über ihre Rücksetzeingänge mit Hilfe der Rückstelltaste $T_{CLR}$ rückgesetzt werden.

Alle von der erfindungsgemäßen Prüfeinrichtung bewerteten und verknüpften Bussignale können/zum Triggern externer Geräte verwendet werden. Das dynamische Verhalten der Anzeige-Einrichtungen ist bei einer Fehlersuche aufschlußreich. Die erfindungsgemäße Prüfeinrichtung beeinfluß im Gegensatz zu Emulatoren nicht die Betriebsverhältnisse des zu prüfenden Systems. Außerdem gewährleistet die Prüfeinrichtung im Gegensatz zu einem Logik-Analysator Echtzeitmessungen. Der geringe Schaltungsaufwand und die einfache Handhabung ermöglichen es, bei einem Mehrrechner-System jeden Einzelrechner, z.B. jeden Mikrocomputer, mit einer erfindungsgemäßen Prüfeinrich-tung auszustatten.

14 Patentansprüche
5 Figuren

Patentansprüche

1. Prüfeinrichtung zur Fehlerdiagnose in Mehrrechner-Systemen, insbesondere in Multimikrocomputer-Systemen, bei der bei der Fehlerdiagnose zu berücksichtigende Signalspannungen auf dem Systembus drch von diesen mittelbar gesteuerte Anzeigeeinrichtungen als optische Signale erkennbar gemacht werden, dadurch g e - k e n n z e i c h n e t , daß eine Entkopplungsein- richtung (4) zum Verbinden einer Auswerte-/Steuerlogik (1, 2, 3) mit dem Systembus (5) vorgesehen ist, daß eine Adreß-/Dateninformations-Anzeigeeinrichtung (11), eine Zugriffssignal-Anzeigeeinrichtung (12), eine Bussteuersignal-Anzeigeeinrichtung (21) und eine Interruptsignal-Anzeigeeinrichtung (31) vorgesehen sind, daß zumindest ein an sich bekannter Vergleicherbaustein (z.B. 1026) vorgesehen ist, dessen einer ersten Gruppe von Signaleingängen eine einer vorwählbaren, mittels eines Selektionsschalters (z.B. S1) einstellbaren Selektionsadresse entsprechende Binärinformation und dessen einer zweiten Gruppe von Signaleingängen alle auf der Adreßleitung des Systembus (5) auftretenden Adreßinformationen zugeführt werden, daß der Vergleicherbaustein (1026) bei Gleichheit der der Selektionsadresse entsprechenden Binärinformation mit einer auftretenden Adreßinformation ein Ausgangssignal abgibt, mittels dessen ein gleichzeitig auf einer Zugriffssignal-Busleitung (z.B. MRDC) auftretendes Zugriffssignal über zumindest ein Verknüpfungsglied für die Prüfeinrichtung wirksam geschaltet wird, daß die Adreß-Dateninformations-Anzeigeeinrichtung (11) mittels eines derart wirksam geschalteten Zugriffssignals freigegeben wird und daß die Zugriffssignal-Anzeigeeinrichtung (12) und die Interruptsignal-Anzeigeeinrichtung (31) jeweils Anzeigemittel einer ersten Gruppe zum Erkennbarmachen der momentanen Zustände aller Zugriffssignal-Busleitungen (IOWC, IORC, MWTC, MRDC) und aller Interruptsignalleitungen (INTØ, INT1 ... INT7) und jeweils eine zweite Gruppe von Anzeigemitteln zum Erkennbarmachen des jeweils zuletzt aktiven Zugriffssignals und/oder Interruptsignals enthalten.

2. Prüfeinrichtung nach Anspruch 1, dadurch  g e - k e n n z e i c h n e t , daß ein erster Vergleicher-baustein (1026) mit einem ersten Selektionsschalter (S1), ein zweiter Vergleicherbaustein (1027) mit einem zweiten Selektionsschalter (S2), ein dritter Vergleicherbaustein (1028) mit einem dritten Selektionsschalter (S3) und ein vierter Vergleicherbaustein (1029) mit einem vierten Selektionsschalter (S4) vorgesehen sind und daß die Vergleicherbausteine (1026, 1027, 1028, 1029) über ihre jeweiligen Hilfssignaleingänge und Signalausgänge derart zusammengeschaltet sind, daß ein gemeinsames Vergleicherbaustein-Ausgangssignal in dem Falle von einem der Vergleicherbausteine (z.B. 1029) abgegeben wird, wenn eine über alle zu den ersten Gruppen von Signaleingängen gehörenden Signaleingänge reichende Binärinformation mit einer über alle zu den zweiten Gruppen von Signaleingängen gehörenden Signaleingänge reichende Adreßinformation gleich ist.

3. Prüfeinrichtung nach Anspruch 1, dadurch  g e - k e n n z e i c h n e t , daß ein Selektionszähler (1023) vorgesehen ist, mittels dessen die Anzahl von einer vorgewählten Selektionsadresse entsprechenden Adressierungsereignissen bestimmbar ist, und daß ein Vorwählschalter (S5) vorgesehen ist, mittels dessen die Anzahl der Adressierungsereignisse dadurch vorwählbar ist, daß eine die vorzuwählende Anzahl repräsentierende Binärinformation über die Schaltstellen des Vorwählschalters (S5) an die bei dem vorgesehenen Selektions-zähler (1023) vorhandenen Vorwählsignaleingänge ge-führt wird.

4. Prüfeinrichtung nach Anspruch 1, dadurch  g e  -  k e n n z e i c h n e t  , daß ein Freigabeschalter (S8) vorgesehen ist, mittels dessen bestimmbar ist, welche Art von Zugriffssignalen die Adreß-/Dateninformations-Anzeigeeinrichtung (11) freizugeben hat.

5. Prüfeinrichtung nach Anspruch 1, dadurch  g e  -  k e n n z e i c h n e t  , daß ein Betriebsarten-schalter (S6) vorgesehen ist, mittels dessen die für eine Adreßselektion vorgesehenen Schaltungselemente wirksam oder unwirksam zu schalten sind.

6. Prüfeinrichtung nach Anspruch 3, dadurch  g e  -  k e n n z e i c h n e t  , daß ein Aktivierungsschal-ter (S7) vorgesehen ist, mittels dessen der Selektionszähler (1023) aktiv oder inaktiv geschaltet werden kann.

7. Prüfeinrichtung nach Anspruch 3, dadurch  g e  -  k e n n z e i c h n e t  , daß ein Umschalter (S10) vorgesehen ist, mittels dessen die Betriebsart des Selektionszählers (1023) umschaltbar ist, so daß entweder ein Abzählen oder ein Durchzählen bis zu einer mittels des Vorwählschalters (S5) vorzuwählenden Anzahl von Adressierungsereignissen ermöglicht ist.

8. Prüfeinrichtung nach Anspruch 1, dadurch  g e  -  k e n n z e i c h n e t  , daß mehrere Bussteuersignal-Anzeigemittel (211, 212, 213, 214, 215) innerhalb der Bussteuersignal-Anzeigeeinrichtung (21) vorgesehen sind, denen jeweils individuell zugeordnete retriggerbare Monoflops (2016, 2017, 2018, 2019, 2020) mittelbar vorgeschaltet sind, mittels derer auf die Bussteuersignale übertragenden Bussteuersignal-Leitungen (INIT/,
XACK/, BUSY/, EPRO/, BPRII/) auftretende kurze Einzelreaktionen, wie Nadelimpulse, erfaßt und zeitlich gedehnt erkennbar gemacht werden können.

9. Prüfeinrichtung nach Anspruch 8, dadurch   g e  -
k e n n z e i c h n e t  , daß ein Detektionsschalter
(S9) vorgesehen ist, daß den Bussteuersignal-Leitungen (INIT/, XACK/, BUSY/, EPRO/, BPRII/) jeweils
individuell zugeordnete Exklusiv-ODER-Glieder (2001,
2002, 2003, 2004, 2005) vorgesehen sind und daß einem
jeweils ersten Signaleingang der Exklusiv-ODER-Glieder
(2001, 2002, 2003, 2004, 2005) über die betreffende
Bussteuersignal-Leitung (z.B. INIT/) gesendete Signale
und einem jeweils zweiten Signaleingang der Exklusiv-
ODER-Glieder (2001, 2002, 2003, 2004, 2005) mittels
des Detektionsschalters (S9) entweder ein Dauersignal
mit dem Pegel "H" oder dem Pegel "L" zuführbar sind,
so daß kurze Einzelreaktionen auf den betreffenden Bussteuersignal-Leitungen (z.B. INIT/) mit dem Signalpegel "H" oder dem Signalpegel "L" detektierbar sind.

10. Prüfeinrichtung nach Anspruch 1 oder 4, dadurch
g e k e n n z e i c h n e t  , daß in der Adreß-/
Dateninformations-Anzeigeeinrichtung (11) mehrere Anzeigebausteine (111, 112, 113, 114, 115, 116) enthalten
sind, die als an sich bekannte Hexadezimal-Anzeigebausteine ausgeführt sind.

11. Prüfeinrichtung nach Anspruch 1, dadurch   g e  -
k e n n z e i c h n e t  , daß die in der Zugriffssignal-Anzeigeeinrichtung (12) enthaltenen Anzeigemittel der ersten Gruppe (121, 123, 125, 127) LED einer ersten Lichtfarbentype, vorzugsweise grünemittierende LED, und die Anzeigemittel der zweiten Gruppe (122, 124, 126, 128) LED einer zweiten Lichtfarbentype, vorzugsweise rotemittierende LED, sind.

12. Prüfeinrichtung nach Anspruch 1, dadurch  g e -
k e n n z e i c h n e t  , daß die in der Interruptsignal-Anzeigeeinrichtung (31) enthaltenen Anzeigemittel der ersten Gruppe (3101/Ø ... 3101/7) LED einer ersten Lichtfarbentype, vorzugsweise grünemittierende LED, und die Anzeigemittel der zweiten Gruppe (3102/Ø ... 3102/7) LED einer zweiten Lichtfarbentype, vorzugsweise rotemittierende LED, sind.

13. Prüfeinrichtung nach Anspruch 7, dadurch  g e -
k e n n z e i c h n e t  , daß dem Selektionszähler (1023) ein Zählanzeigebaustein (1024) zugeordnet ist, mittels dessen der Zählerstand des Selektionszählers (1023) erkennbar zu machen ist.

14. Prüfeinrichtung nach einem der Ansprüche 1, 7 oder 13, dadurch  g e k e n n z e i c h n e t  , daß eine Rückstelltaste $T_{CLR}$ vorgesehen ist, mittels derer alle für die Anzeigebausteine und/oder Anzeigemittel gespeicherten Signale gelöscht werden können und der Selektionszähler (1023) mit dem mittels des Vorwählschalters (S5) vorgewählten Zählwert geladen werden kann.

1/5

FIG 1

## FIG 2

FIG 3

FIG 4   4/5

0024045

FIG 5 5/5

0024045

0024045

Europäisches
Patentamt

**EUROPÄISCHER RECHERCHENBERICHT**

Nummer der Anmeldung

EP 80 10 4690

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | PROCEEDINGS OF THE NATIONAL COMPUTER CONFERENCE AND EXPOSITION, Band 42, 4.-8. Juni 1973, Seiten 75-79, (A.F.I.P.S. Conference proceedings) New York, R.E. FRYER: "The memory bus monitor - A new device for developing real-time systems"  * Seiten 75-76; Figuren 1-3 * | 1 |
| | EDN, Band 23, Nr. 16, 5. September 1978, Seiten 153-156 M.M. ZYLA: "Save both time and money debugging a $\mu$P prototype board"  * Seite 153, Spalte 1; Figuren 1,2 * | 1 |
| | ELECTRONIC DESIGN, Band 24, Nr. 18, 1. September 1976, Seiten 82-87 "Design a $\mu$P analyzer to handle that "after-the-design" test problem. With the analyzer, you can capture data and trace both hardware and software"  * Seite 82, Spalte 1; Figuren 2, 4-6 * | 1,3 |
| | IBM TECHNICAL DISCLOSURE BULLETIN, Band 21, Nr. 5, Oktober 1978, Seiten 1985-1986 New York, U.S.A. L.C. ABRAHAMS et al.: "Subsystem analyzer and controller"  * Seiten 1985-1986 *  ./. | 1 |

**KLASSIFIKATION DER ANMELDUNG (Int Cl³)**

G 06 F 11/22
11/30

**RECHERCHIERTE SACHGEBIETE (Int. Cl.³)**

G 06 F 11/22
11/30
11/32
11/34
11/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-11-1980 | GUIVOL |

EPA form 1503.1 06.78

0024045

Europäisches
Patentamt

EUROPÄISCHER RECHERCHENBERICHT

Nummer der Anmeldung

EP 80 10 4690

-2-

| Kategorie | Kennzeichnung des Dokuments mit Angabe, soweit erforderlich, der Maßgeblichen Teile | betrifft Anspruch | KLASSIFIKATION DER ANMELDUNG (Int Cl.³) |
|---|---|---|---|
| | **EINSCHLÄGIGE DOKUMENTE** | | |
| | ELEKTRONIK, Band 25, Nr. 9, September 1976, Seiten 66-68 "Logik-Tester für Mikroprozessor-Systeme"<br><br>* Seite 66, Spalte 2; Seite 67; Bilder 1,2 *<br><br>-- | 1 | |
| | US - A - 4 016 543 (FRANKS)<br><br>* Figuren 2,5A; Spalten 2,3; Spalte 4, Zeilen 42-65 *<br><br>-- | 1,2 | |
| | US - A - 3 927 310 (D'ANNA)<br><br>* Zeile 2; Figur *<br><br>-- | 1 | RECHERCHIERTE SACHGEBIETE (Int. Cl.³) |
| | FR - A - 2 292 285 (JEROME)<br><br>* Seiten 1,2; Figur *<br><br>---- | 1 | |